# EUROPÄISCHE PATENTSCHRIFT

(11) **EP 2 987 978 B1**
(45) Veröffentlichungstag und Bekanntmachung des Hinweises auf die Patenterteilung: **13.02.2019**
(21) Anmeldenummer: 15177546.7
(22) Anmeldetag: 20.07.2015
(51) Int. Cl.: F01N 3/30, F02B 37/18

(54) **ANTRIEBSEINHEIT UND VERFAHREN ZUM BETRIEB EINER ANTRIEBSEINHEIT**
DRIVE UNIT AND METHOD FOR OPERATING A DRIVE UNIT
MOTEUR ET PROCEDE DE FONCTIONNEMENT D'UN MOTEUR

(30) Priorität: 21.08.2014 EP 14181717
(43) Veröffentlichungstag der Anmeldung: 24.02.2016
(73) Patentinhaber: Winterthur Gas & Diesel AG, 8401 Winterthur (CH)
(72) Erfinder: Dirk Kadau,, 8046 Zürich (CH); Peitz, Daniel, 5313 Klingnau (CH); Giuseppe Arena,, 8408 Winterthur (CH); Olaf Habicht,, 8413 Neftenbach (CH); Jean-Marc Luder,, 8143 Stallikon (CH); Martin Brutsche, Martin, 8400 Winterthur (CH)
(74) Vertreter: Intellectual Property Services GmbH

(56) Entgegenhaltungen:
- EP-A1- 0 389 891
- EP-A1- 2 116 703
- EP-A1- 2 123 877
- WO-A1-2008/125579
- WO-A1-2014/020230
- JP-A- H09 209 742
- JP-A- 2011 127 509

## Beschreibung

Die Erfindung betrifft eine Antriebseinheit mit einem Verbrennungsmotor und einer Abgasreinigungsanlage gemäß dem Oberbegriff des Anspruchs 1 und ein Verfahren zum Betrieb einer Antriebseinheit mit einem Verbrennungsmotor und einer Abgasreinigungsanlage gemäss dem Oberbegriff des Anspruchs 6.

In der DE 196 40 166 A1 wird eine Antriebseinheit mit einem Verbrennungsmotor und einer Abgasreinigungsanlage in Form eines Oxidationskatalysators beschrieben. Die Antriebseinheit kann einen Turbolader aufweisen, wobei nicht weiter beschrieben ist, wo genau der Turbolader angeordnet ist und wie er mit Abgas versorgt wird. In der DE 196 40 166 A1 wird ausserdem ein Verfahren zum Betrieb der Antriebseinheit beschrieben. Bei diesem Verfahren wird nach dem Abstellen des Verbrennungsmotors die Abgasreinigungsanlage für eine begrenzte Zeitdauer mit Frischluft durchspült. Dieses Verfahren wird durchgeführt, um während des Stillstands und bei einem erneuten Anlassen des Verbrennungsmotors eine Emission von Kohlenwasserstoffen zu verhindern.

Aus der EP 2 116 703 A1 ist eine Antriebseinheit mit einem Verbrennungsmotor, einem Turbolader und einer Abgasreinigungsanlage bekannt, bei welcher eine Bypass-Leitung vorgesehen ist, um die Abgase wahlweise an der Abgasreinigungsanlage vorbei und direkt zum Turbolader zu führen. Ferner ist eine Abgasrezirkulation vorgesehen, um einen Teil der Abgase aus dem Bereich zwischen der Abgasreinigungsanlage und dem Turbolader zum Lufteinlasssystem des Verbrennungsmotors zurückzuführen. Ein Spülen der Abgasreinigungsanlage ist hier nicht vorgesehen.

Ein Spülen der Abgasreinigungsanlage kann insbesondere auch dann sinnvoll sein, wenn die Abgasreinigungsanlage als ein sogenannter SCR-Katalysator (SCR= Selective Catalytic Reduction, auf Deutsch: selektive katalytische Reduktion) ausgeführt ist oder einen solchen aufweist. Wenn ein SCR-Katalysator nicht mehr von Abgas durchströmt wird, kann eine Restmenge von Abgas im SCR-Katalysator zurück bleiben. Beim Abkühlen des SCR-Katalysators kondensiert das Abgas. Im Abgas vorhandener Schwefel kann dann zusammen mit ebenfalls im Abgas vorhandenem Wasser Schwefelsäure bilden, welche die Wände des SCR-Katalysators angreifen kann.

Das Spülen des SCR-Katalysators kann dabei nicht nur bei abgeschaltetem Verbrennungsmotor, sondern auch bei laufendem Verbrennungsmotor erfolgen. Dies ist dann der Fall, wenn das Abgas des Verbrennungsmotors nicht immer durch die Abgasreinigungsanlage, sondern auch an ihr vorbei geführt werden kann, die Abgasreinigungsanlage sich also in einem aktiven oder inaktiven Zustand befinden kann. Derartige Wechsel zwischen dem aktiven und inaktiven Zustand der Abgasreinigungsanlage bei laufendem Verbrennungsmotor können insbesondere bei Antriebseinheiten von Hochseeschiffen vorkommen, bei denen sich die Abgasreinigungsanlage in Küstennähe im aktiven Zustand und auf hoher See im inaktiven Zustand befindet.

Ein Spülen einer Abgasreinigungsanlage kann auch dann sinnvoll sein, wenn deren Aufbau von dem oben beschriebenen abweicht.

Es ist daher insbesondere die Aufgabe der Erfindung, eine Antriebseinheit und ein Verfahren vorzuschlagen, welche eine effektive Spülung einer Abgasreinigungsanlage ermöglichen, wobei insbesondere der Betrieb des Verbrennungsmotors durch das Spülen möglichst wenig beeinflusst wird. Erfindungsgemäß wird diese Aufgabe mit einer Antriebseinheit mit den Merkmalen des Anspruchs 1 und ein Verfahren mit den Merkmalen des Anspruchs 7 gelöst.

Die Antriebseinheit verfügt über einen Verbrennungsmotor, einen Turbolader, eine Abgasreinigungsanlage zur Reinigung eines Abgases des Verbrennungsmotors und einen Auslass für das Abgas in die Umgebung. Die genannten Elemente sind so ausgeführt und angeordnet, dass das Abgas vom Verbrennungsmotor in einer ersten Strömungsverbindung über die Abgasreinigungsanlage zum Turbolader und in einer zweiten Strömungsverbindung direkt, also nicht über die Abgasreinigungsanlage zum Turbolader und in beiden Fällen anschliessend zum Auslass strömen kann. Erfindungsgemäss ist eine Spüleinrichtung vorgesehen, mittels welcher der Abgasreinigungsanlage ein Spülmedium zugeführt werden kann, und es ist eine direkte, von der zweiten Strömungsverbindung unabhängige dritte Strömungsverbindung von der Abgasreinigungsanlage zum Auslass herstellbar. Die dritte Strömungsverbindung kann insbesondere mittels eines ansteuerbaren Ventils geöffnet oder geschlossen werden.

Damit kann ein Spülfluid beispielsweise in Form von Luft, das zum Spülen der Abgasreinigungsanlage in die Abgasreinigungsanlage eingeleitet wird, zusammen mit dem noch in der Abgasreinigungsanlage vorhandenen Abgas am Turbolader vorbei direkt zum Auslass und damit in die Umwelt geleitet werden. Dies ist insbesondere dann vorteilhaft, wenn das Spülen der Abgasreinigungsanlage bei laufendem Verbrennungsmotor erfolgt. Damit eine effektive Spülung ermöglicht wird, wird das Spülmedium insbesondere so eingeleitet, dass ein Überdruck von beispielsweise bis zu 4 bar in der Abgasreinigungsanlage entsteht. Würde das unter dem genannten Überdruck stehende Spülfluid in Strömungsrichtung des Abgases gesehen vor dem Turbolader eingeleitet werden, so würde das einen Druck in der zweiten Strömungsverbindung vom Verbrennungsmotor zum Turbolader stark beeinflussen, insbesondere erhöhen. Dies kann einen negativen Einfluss auf das Betriebsverhalten des Verbrennungsmotors haben. Durch die erfindungsgemässe Umgehungsmöglichkeit des Turboladers kann das Spülfluid direkt zum Auslass und damit in die Umwelt abgeleitet werden. Damit kann es auch während eines Spülvorgangs zu keiner negativen Beeinflussung des Betriebsverhaltens des Verbrennungsmotors kommen. Dies ermöglicht ausserdem, dass die Höhe des genannten Überdrucks beim Spülen gewählt werden kann, ohne auf eine Beeinflussung des Betriebsverhaltens des Verbrennungsmotors achten zu müssen. Ausserdem kann auch die Art des Spülfluids weitgehend frei gewählt werden, da es direkt in die Umwelt geleitet wird und keine Rückwirkungen auf den Verbrennungsmotor oder den Turbolader haben kann.

Die Antriebseinheit ist beispielsweise für ein Schiff, insbesondere ein Hochseeschiff oder auch ein anderes seetaugliches Gefährt vorgesehen. Sie kann aber auch für ein Landfahrzeug oder eine stationäre Anlage, beispielsweise zur Erzeugung von elektrischen Strom vorgesehen sein. Der Verbrennungsmotor ist beispielsweise als ein Dieselmotor, insbesondere als ein 2-Takt-Grossdieselmotor ausgeführt. Es sind aber auch andere Verbrennungsmotoren denkbar, die mit einer Abgasreinigungsanlage und einem Turbolader kombiniert werden können. Die Abgasreinigungsanlage ist insbesondere als ein SCR-Katalysator ausgeführt oder weist zumindest einen SCR-Katalysator auf. Sie kann aber auch als eine andere Art von Katalysator oder Abgasreinigungselement ausgeführt sein. Der Auslass ist insbesondere als ein Kamin oder beispielsweise auch als eine Auspuffanlage ausgeführt. Beim aktiven Zustand der Abgasreinigungsanlage ist es auch möglich, dass nicht das gesamte Abgas des Verbrennungsmotors, sondern nur ein Teil durch die Abgasreinigungsanlage strömt.

In Ausgestaltung der Erfindung sind die Zuführung des Spülmediums und die dritte Strömungsverbindung von der Abgasreinigungsanlage zum Auslass auf unterschiedlichen Seiten der Abgasreinigungsanlage angeordnet. Dies ermöglicht eine besonders effektive Durchspülung der Abgasreinigungsanlage. Der Begriff "Seiten der Abgasreinigungsanlage" ist bezüglich der Strömungsrichtung des Abgases im aktiven Zustand der Abgasreinigungsanlage zu verstehen.

Die Zuführung des Abgases zur Abgasreinigungsanlage erfolgt insbesondere über eine erste Verbindungsleitung und die Ableitung zum Turbolader über eine zweite Verbindungsleitung. Die Zuführung des Spülmediums erfolgt insbesondere in die erste Verbindungsleitung und die Strömungsverbindung zum Auslass über die zweite Verbindungsleitung. Es ist auch eine umgekehrte Anordnung möglich. Damit wird ermöglicht, dass die gesamte Abgasreinigungsanlage gespült werden kann. Die Zuführung und die Strömungsverbindung zum Auslass sind dabei insbesondere möglichst nahe an der der zweiten Strömungsverbindung vom Verbrennungsmotor zum Turbolader angeordnet. Damit kann erreicht werden, dass auch möglichst grosse Bereiche der ersten und zweiten Verbindungsleitung gespült werden können.

In Ausgestaltung der Erfindung kann auf beiden Seiten der Abgasreinigungsanlage eine direkte Strömungsverbindung zum Auslass hergestellt werden. Damit können unabhängig von der Stelle, wo das Spülfluid zugeführt wird, möglichst grosse Bereiche der Abgasreinigungsanlage und der Verbindungsleitungen gespült werden. Insbesondere kann das Spülfluid nicht in eine der Verbindungsleitungen, sondern direkt in Abgasreinigungsanlage zugeführt werden. Die Ableitung des Spülfluids zum Auslass kann dann entweder gleichzeitig über beide o.g. Strömungsverbindungen zum Auslass oder nacheinander oder abwechselnd über jeweils eine Strömungsverbindung erfolgen.

In Ausgestaltung der Erfindung wird das Spülmedium von einer Russ-Ausblasvorrichtung zur Verfügung gestellt. In der Abgasreinigungsanlage kann sich insbesondere in Verbindung mit Gross-Dieselmotoren Russ ablagern, der in regelmässigen Abständen von einer Russ-Ausblasvorrichtung (Englisch: Soot Blower) insbesondere mittels Druckluft ausgeblasen werden muss. Damit weist die Antriebseinheit bereits eine Russ-Ausblasvorrichtung auf, die ein Spülmedium insbesondere in Form von Druckluft bereitstellen kann. Durch die Nutzung der Russ-Ausblasvorrichtung zur Bereitstellung des Spülmediums kann vorteilhaft auf das Vorsehen eines separaten Bauteils für die Bereitstellung des Spülmediums verzichtet werden. Dies ermöglicht eine besonders kostengünstige Antriebsvorrichtung, die auch insbesondere wenig Bauraum in Anspruch nimmt. Das Spülmedium kann auch von einer separaten Spüleinrichtung zur Verfügung gestellt werden.

In Ausgestaltung der Erfindung wird das Spülmedium von einem Ladeluft-Receiver des Verbrennungsmotors zur Verfügung gestellt. Unter einem Ladeluft-Receiver ist ein Druckraum zu verstehen, aus dem der Verbrennungsmotor mit Lade- oder Verbrennungsluft versorgt wird. Im Ladeluft-Receiver herrscht ein Überdruck, der vom Turbolader erzeugt wird Durch die Nutzung des Ladeluft-Receivers zur Bereitstellung des Spülmediums kann vorteilhaft auf das Vorsehen eines separaten Bauteils für die Bereitstellung des Spülmediums verzichtet werden. Dies ermöglicht eine besonders kostengünstige Antriebsvorrichtung, die auch insbesondere wenig Bauraum in Anspruch nimmt.

Die o.g. Aufgabe wird auch durch ein Verfahren zum Betrieb einer Antriebseinheit mit einem Verbrennungsmotors und einer Abgasreinigungsanlage zur Reinigung eines Abgases des Verbrennungsmotors gelöst, wobei das Abgas in einem aktiven Zustand der Abgasreinigungsanlage über eine erste und eine zweite Verbindungsleitung vom Verbrennungsmotor über die Abgasreinigungsanlage und in einem inaktiven Zustand der Abgasreinigungsanlage an der Abgasreinigungsanlage vorbei zu einem Auslass geleitet wird. Nach einem Wechsel vom aktiven in den inaktiven Zustand wird die Abgasreinigungsanlage für eine zeitlich begrenzte Spülperiode von einem Spülmedium durchströmt. Dies ermöglicht eine effektive Spülung der Abgasreinigungsanlage. Durch die zeitliche Begrenzung der Spülperiode wird auch in dem Fall, in dem das Spülfluid nicht direkt zum Auslass, sondern beispielsweise über einen Turbolader zum Auslass abgeführt wird, das Betriebsverhalten des Verbrennungsmotors möglichst wenig beeinflusst. Ausserdem ermöglicht die genannte zeitliche Begrenzung einen möglichst geringen Verbrauch an Spülmedium. Die Spülperiode dauert beispielsweise zwischen 15 und 180 Minuten, insbesondere zwischen 30 und 120 Minuten.

Das Zuführen des Spülfluids kann dabei in die Abgasreinigungsanlage direkt oder in eine der Verbindungsleitungen erfolgen. Die Verbindungsleitungen können auch nur als Anschluss-Stutzen ausgeführt sein.

In Ausgestaltung der Erfindung ist in der ersten Verbindungsleitung ein erstes Ventil und in der auf einer anderen Seite der Abgasreinigungsanlage angeordneten zweiten Verbindungsleitung ein zweites Ventil angeordnet .In der Spülperiode ist eines der Ventile geöffnet und das andere geschlossen. Damit können unabhängig von der Stelle, wo das Spülfluid zugeführt wird, möglichst grosse Bereiche der Abgasreinigungsanlage und der Verbindungsleitungen gespült werden. Die Ventile werden einmal oder insbesondere wechselseitig mehrmals nacheinander entsprechend geöffnet und geschlossen. Dadurch, dass nur ein Ventil geöffnet ist, kann ausserdem wirkungsvoll ein Rückströmen von Abgas über eine der Verbindungsleitungen verhindert werden. Das mehrmalige Öffnen und Schliessen ermöglicht eine besonders effektive Spülung der Abgasreinigungsanlage.

Beim Spülvorgang ist dabei insbesondere relevant, dass ein Druck des Spülmediums in der Abgasreinigungsanlage höher ist als der Druck des Abgases in der zweiten Strömungsverbindung vom Verbrennungsmotor zum Turbolader. Nur so kann ein Spülen der Abgasreinigungsanlage gewährleistet werden. Die genannten Ventile sind insbesondere ansteuerbar ausgeführt.

Erfindungsgemäß strömt im aktiven Zustand der Abgasreinigungsanlage das Abgas über einen Turbolader zum Auslass und in der Spülperiode ist die Abgasreinigungsanlage direkt mit dem Auslass strömungsverbunden, so dass das Spülmedium am Turbolader vorbei direkt zum Auslass strömen kann. Dieses Verfahren hat dieselben Vorteile wie die entsprechende Antriebseinheit.

In Ausgestaltung der Erfindung wird vor der Durchströmung der Abgasreinigungsanlage mit dem Spülfluid die Abgasreinigungsanlage direkt mit dem Auslass strömungsverbunden. Die Verbindung kann direkt zwischen der Abgasreinigungsanlage und dem Auslass oder indirekt über eine oder beide Verbindungsleitungen hergestellt werden. Nach dem Wechsel vom aktiven in den inaktiven Zustand herrscht in der Abgasreinigungsanlage ein Druck deutlich höher als der Atmosphärendruck im Auslass. Durch die Herstellung der genannten Strömungsverbindung entweicht auch ohne die Zuführung von Spülfluid ein Grossteil des sich in der Abgasreinigungsanlage befindlichen Abgases zum Auslass und muss damit durch das Spülfluid nicht mehr ausgespült werden. Das Spülfluid wird insbesondere erst zugeführt, wenn ein Druckausgleich stattgefunden hat und damit in der Abgasreinigungsanlage auch Atmosphärendruck herrscht. Damit wird auch der Gegendruck für das Zuführen des Spülfluids deutlich abgesenkt, so dass es mit einem nicht so hohen Druck zur Verfügung gestellt werden muss. Diese Ausgestaltung des erfindungsgemässen Verfahrens hat somit ein Spülen mit geringem Energieaufwand.

Der Verfahrensschritt, vor der Durchströmung der Abgasreinigungsanlage mit dem Spülfluid zwischen der Abgasreinigungsanlage und dem Auslass eine Strömungsverbindung unter Umgehung des Turboladers herzustellen, ist auch dann vorteilhaft durchführbar, wenn die Abgasreinigungsanlage im inaktiven Zustand dauerhaft und nicht nur in einer zeitlich begrenzten Spülperiode von Spülfluid durchströmt wird..

In Ausgestaltung der Erfindung wird in der Spülperiode das Spülmedium in einer der Verbindungsleitungen eingeleitet. Damit wird ermöglicht, dass die gesamte Abgasreinigungsanlage gespült werden kann.

In Ausgestaltung der Erfindung wird in der Spülperiode das Spülmedium in einer der Verbindungsleitungen eingeleitet und von der anderen, auf der anderen Seite der Abgasreinigungsanlage angeordneten Verbindungsleitung eine Strömungsverbindung zum Auslass hergestellt wird. Diese Ausgestaltung des Verfahrens hat dieselben Vorteile wie die entsprechende Antriebseinheit.

In Ausgestaltung der Erfindung wird das Spülmedium von einer Russ-Ausblasvorrichtung zur Verfügung gestellt. Diese Ausgestaltung des Verfahrens hat dieselben Vorteile wie die entsprechende Antriebseinheit.

In Ausgestaltung der Erfindung wird das Spülmedium von einem Ladeluft-Receiver des Verbrennungsmotors zur Verfügung gestellt. Diese Ausgestaltung des Verfahrens hat dieselben Vorteile wie die entsprechende Antriebseinheit.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: einen schematischen Aufbau einer Antriebseinheit,
- Fig. 2: einen schematischen Aufbau einer Antriebseinheit in einer zweiten Ausführungsform,
- Fig. 3: einen schematischen Aufbau einer Antriebseinheit in einer dritten Ausführungsform,
- Fig. 4: einen schematischen Aufbau einer Antriebseinheit in einer vierten Ausführungsform und
- Fig. 5: einen schematischen Aufbau einer Antriebseinheit in einer fünften Ausführungsform und
- Fig. 6: einen schematischen Aufbau einer Antriebseinheit in einer sechsten Ausführungsform, welche ebenfalls zur Ausführung des erfindungsgemässen Verfahrens geeignet ist.

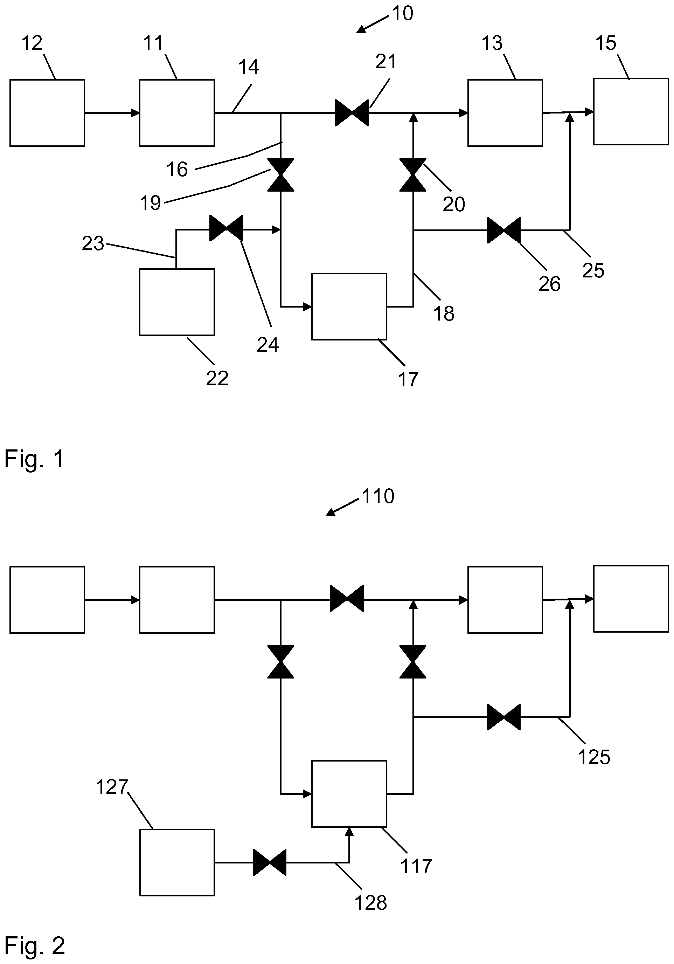

Gemäss Fig. 1 weist eine Antriebseinheit 10 einen Verbrennungsmotor 11 in Form eines 2-Takt-Grossdiesel Motors auf, der insbesondere in einem Hochseeschiff eingesetzt werden kann. Der Verbrennungsmotor 11 wird von einem so genannten Ladeluft-Receiver 12 mit Lade- bzw. Verbrennungsluft versorgt. Im Ladeluft-Receiver 12 herrscht ein Überdruck, der von einem Turbolader 13 erzeugt wird. Die für die Erzeugung des Überdrucks im Ladeluft-Receiver 12 notwendigen Verbindungsleitungen sind aus Übersichtlichkeitsgründen nicht dargestellt.

Das Abgas des Verbrennungsmotors 11 kann über eine Direktleitung 14 vom Verbrennungsmotor 11 zum Turbolader 13 geführt werden und so für den Antrieb des Turboladers 13 sorgen. Vom Turbolader 13 gelangt das Abgas dann zu einem Auslass 15, der im vorliegenden Fall als ein Kamin ausgeführt ist.

Das Abgas des Verbrennungsmotors 11 kann statt direkt zum Turbolader 13 auch über eine erste Verbindungsleitung 16 zu einer Abgasreinigungsanlage 17 geleitet werden. Die Abgasreinigungsanlage 17 ist im vorliegenden Fall als ein SCR-Katalysator ausgeführt. Von der Abgasreinigungsanlage 17 kann das Abgas über eine zweite Verbindungsleitung 18 ebenfalls zum Turbolader 13 geleitet werden und so den Turbolader 13 antreiben.

Zur Leitung des Abgases sind in der ersten Verbindungsleitung 16 zwischen Verbrennungsmotor 11 und Abgasreinigungsanlage 17 ein erstes Ventil 19 und in der zweiten Verbindungsleitung 18 von der Abgasreinigungsanlage 17 zum Turbolader 13 ein zweites Ventil 20 angeordnet. Ausserdem ist in der Direktleitung 14 ein drittes Ventil 21 angeordnet. Diese Ventile können wie auch noch weitere beschriebene Ventile von einer nicht dargestellten Steuerungseinrichtung angesteuert, also insbesondere geöffnet und geschlossen werden. Es ist auch möglich, dass zumindest ein Teil der Ventile auch nur teilweise geöffnet oder geschlossen oder ein gewünschter Durchfluss eingestellt werden kann.

In einem aktiven Zustand der Abgasreinigungsanlage 17 ist das erste Ventil 19 und das zweite Ventil 20 zumindest teilweise offen, so dass Abgas vom Verbrennungsmotor 11 über eine erste Strömungsverbindung, die von der ersten Verbindungsleitung 16, der Abgasreinigungsanlage 17 und der zweiten Verbindungsleitung 18 gebildet wird, zum Turbolader 13 strömt. Das dritte Ventil 21 in der Direktleitung 14 ist dabei geschlossen, so dass kein Abgas direkt vom Verbrennungsmotor 11 zum Turbolader 13 strömen kann.

In einem inaktiven Zustand der Abgasreinigungsanlage 17 ist das erste Ventil 19 und das zweite Ventil 20 vollständig geschlossen, so dass kein Abgas vom Verbrennungsmotor 11 über die erste Strömungsverbindung zum Turbolader 13 strömen kann. Das dritte Ventil 21 in der Direktleitung 14 ist geöffnet, so dass das Abgas direkt vom Verbrennungsmotor 11 über eine von der Direktleitung 14 gebildete zweite Strömungsverbindung zum Turbolader 13 strömen kann.

Nach dem Wechsel vom aktiven in den inaktiven Zustand der Abgasreinigungsanlage 17 soll die Abgasreinigungsanlage 17 gespült werden. Dazu weist die Antriebseinheit 10 eine Spüleinrichtung 22 auf, die ein Spülmedium in Form von Druckluft zur Verfügung stellen kann. Das Spülmedium kann über eine erste Spülleitung 23 in die erste Verbindungsleitung 16 eingeleitet werden. Die Einleitung erfolgt dabei zwischen dem ersten Ventil 19 und der Abgasreinigungsanlage 17. In der ersten Spülleitung 23 ist ein viertes Ventil 24 angeordnet, über das die Zuführung des Spülmediums eingestellt werden kann. Zum Spülen der Abgasreinigungsanlage 17 wird das vierte Ventil 24 geöffnet, so dass Spülmedium über die erste Verbindungsleitung 16 zur Abgasreinigungsanlage 17 strömen kann. Damit das Spülmedium nicht auch in Richtung Verbrennungsmotor 11 strömt, ist das erste Ventil 19 geschlossen. Neben der Abgasreinigungsanlage 17 werden beim Spülen auch die erste und zweite Verbindungsleitung 16, 18 gespült.

Damit beim Spülen kein Spülmedium in die Direktleitung 14 vom Verbrennungsmotor 11 zum Turbolader 13 gelangt, ist das zweite Ventil 20 in der zweiten Verbindungsleitung 18 ebenfalls geschlossen. Das Spülmedium wird über eine erste Auslassleitung 25, die von der zweiten Verbindungsleitung 18 zwischen der Abgasreinigungsanlage 17 und dem zweiten Ventil 20 abzweigt, am Turbolader 13 vorbei direkt zum Auslass 15 geleitet. Die zweite Verbindungsleitung 18 und die erste Auslassleitung 25 bilden damit eine dritte Strömungsverbindung von der Abgasreinigungsanlage 17 zum Auslass 15.

Damit nicht im aktiven Zustand der Abgasreinigungsanlage 17 Abgas über die erste Auslassleitung 25 zum Auslass 15 strömt, ist in der ersten Auslassleitung 25 ein fünftes Ventil 26 angeordnet, welches im aktiven Zustand der Abgasreinigungsanlage 17 geschlossen und während dem Spülen der Abgasreinigungsanlage 17 geöffnet ist.

Nach dem Schliessen des ersten und zweiten Ventils 19, 20 und damit nach dem Wechsel in den inaktiven Zustand der Abgasreinigungsanlage 17 und vor dem Einleiten des Spülfluids wird das fünfte Ventil 26 geöffnet. Damit kann Abgas, das sich unter erhöhtem Druck in der Abgasreinigungsanlage 17 befindet, über die erste Auslassleitung 25 zum Auslass 15 strömen. Erst nachdem sich auch in der Abgasreinigungsanlage 17 ungefähr Atmosphärendruck eingestellt hat, wird Spülfluid in die Abgasreinigungsanlage 17 eingeleitet. Der Druck in der Abgasreinigungsanlage 17 kann dazu gemessen werden oder es wird eine festlegbare Zeitspanne abgewartet, in der der Druckausgleich stattfinden kann. Dieser Druckausgleich vor dem Einleiten des Spülfluids kann bei allen Ausführungsformen mit einer Auslassleitung von der Abgasreinigungsanlage direkt zum Auslass durchgeführt werden.

Die Zuführung des Spülmediums über die erste Spülleitung 23 in die erste Verbindungsleitung 16 ist damit bezüglich der Abgasreinigungsanlage 17 auf einer unterschiedlichen oder anderen Seite als die erste Auslassleitung 25 und damit die dritte Strömungsverbindung von der Abgasreinigungsanlage 17 zum Auslass 15 angeordnet.

Die Abgasreinigungsanlage 17 wird nicht immer gespült, wenn sie in einem inaktiven Zustand ist, sondern nur während einer Spülperiode nach einem Wechsel in den inaktiven Zustand. Die Spülperiode dauert beispielsweise zwischen 15 und 180 Minuten, insbesondere zwischen 30 und 120 Minuten.

Nach Ende der Spülperiode wir das fünfte Ventil 26 geschlossen und damit die direkte Verbindung zwischen Abgasreinigungsanlage 17 und Auslass 15 getrennt. Diese Trennung wird insbesondere bei allen Ausführungsformen mit einer Auslassleitung von der Abgasreinigungsanlage direkt zum Auslass durchgeführt.

Es ist auch möglich, dass das Spülmedium über die zweite Verbindungsleitung zugeführt und über die erste Verbindungsleitung zum Auslass geleitet wird.

In Fig. 2 ist eine Antriebseinheit 110 mit einem sehr ähnlichen Aufbau wie die Antriebseinheit 10 in Fig. 1 dargestellt. Aus diesem Grund wird nur auf die Unterschiede der beiden Antriebseinheiten eingegangen.

Die Antriebseinheit 110 in Fig. 2 weist eine Russ-Ausblasvorrichtung 127 auf, welche über eine Ausblasleitung 128 Druckluft in die Abgasreinigungsanlage 117 einblasen kann. Die Russ-Ausblasvorrichtung 127 dient in erster Linie dazu, Russ, der sich im aktiven Zustand der Abgasreinigungsanlage 117 mit der Zeit in der Abgasreinigungsanlage 117 ablagert, auszublasen. Aus diesem Grund wird die Druckluft auch direkt in die Abgasreinigungsanlage 117 geleitet. Statt zum Ausblasen von Russ kann die von der Russ-Ausblasvorrichtung 127 zur Verfügung gestellte Druckluft auch als Spülmedium zum Spülen der Abgasreinigungsanlage 117 nach einem Wechsel in den aktiven Zustand genutzt werden.

Es ist auch möglich, dass das Spülfluid nicht direkt in die Abgasreinigungsanlage 117, sondern in die erste oder zweite Verbindungsleitung eingeleitet wird.

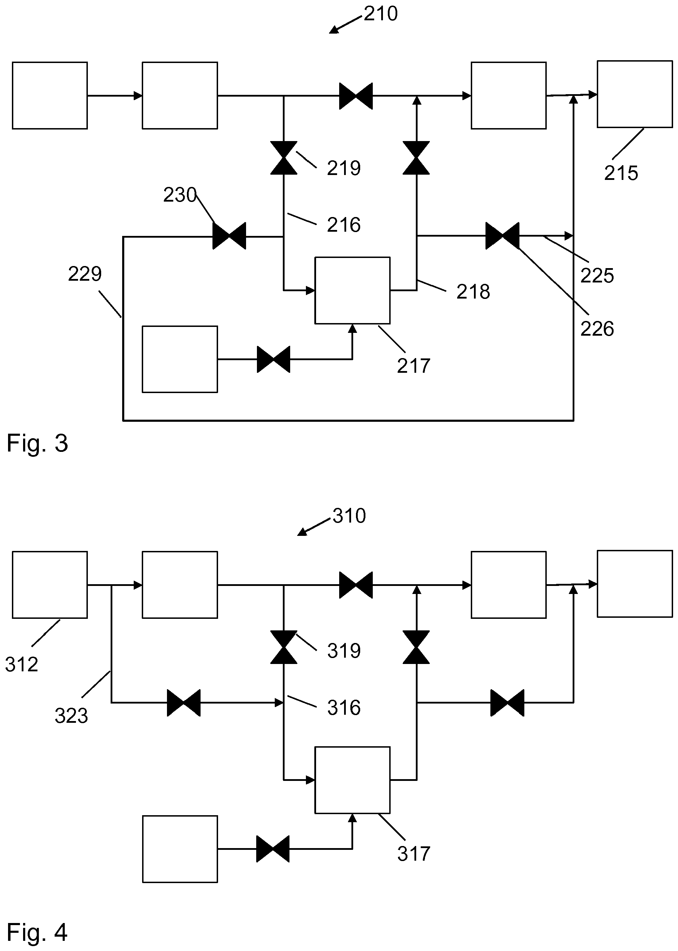

In Fig. 3 ist eine Antriebseinheit 210 mit einem sehr ähnlichen Aufbau wie die Antriebseinheit 110 in Fig. 2 dargestellt. Aus diesem Grund wird nur auf die Unterschiede der beiden Antriebseinheiten eingegangen.

Die Antriebseinheit 210 in Fig. 3 weist zusätzlich zur Antriebseinheit 110 in Fig. 2 eine zweite Auslassleitung 229 mit einem sechsten Ventil 230 auf, die von der ersten Verbindungsleitung 216 zwischen dem ersten Ventil 219 und der Abgasreinigungsanlage 217 abzweigt. Damit kann das Spülmedium während des Spülens entweder über die erste Auslassleitung 225 oder die zweite Auslassleitung 229 oder über beide Auslassleitungen 225, 229 gleichzeitig zum Auslass 215 geleitet werden. Somit kann von der ersten und der zweiten Verbindungsleitung 216, 218 und so auf beiden Seiten der Abgasreinigungsanlage 217 eine direkte Strömungsverbindung zum Auslass 215 hergestellt werden. Das fünfte Ventil 226 und das sechste Ventil 230 sind während des Spülens insbesondere wechselweise offen und geschlossen, so dass das Spülmedium entweder über die erste Auslassleitung 225 oder die zweite Auslassleitung 229 zum Auslass 215 geleitet wird.

Es ist auch möglich, dass das Spülfluid nicht direkt in die Abgasreinigungsanlage, sondern in die erste oder zweite Verbindungsleitung eingeblasen wird.

Es ist auch möglich, dass die erste Auslassleitung von der zweiten Verbindungsleitung zum Auslass entfällt und nur eine zweite Auslassleitung von der ersten Verbindungsleitung zum Auslass vorgesehen ist.

In Fig. 4 ist eine Antriebseinheit 310 mit einem sehr ähnlichen Aufbau wie die Antriebseinheit 110 in Fig. 2 dargestellt. Aus diesem Grund wird nur auf die Unterschiede der beiden Antriebseinheiten eingegangen.

Bei der Antriebseinheit 310 in Fig. 4 wird das Spülmedium in Form von Ladeluft vom Ladeluft-Receiver 312 zur Verfügung gestellt. Dazu kann über eine zweite Spülleitung 323 Ladeluft vom Ladeluft-Receiver 312 zwischen dem ersten Ventil 319 und der Abgasreinigungsanlage 317 in die erste Verbindungsleitung 316 eingespeist werden.

Es ist auch möglich, dass das Spülmedium an derselben Stelle wie bei der Antriebseinrichtung 310 in Fig. 4 oder in die zweite Verbindungsleitung eingespeist werden kann, das Spülmedium aber nicht vom Ladeluft-Receiver, sondern von der Russ-Ausblasvorrichtung zur Verfügung gestellt wird. In diesem Fall wäre in der Leitung zur ersten Verbindungsleitung insbesondere noch ein weiteres Ventil angeordnet, so dass das Spülen und das Russ-Ausblasen unabhängig voneinander angesteuert werden kann.

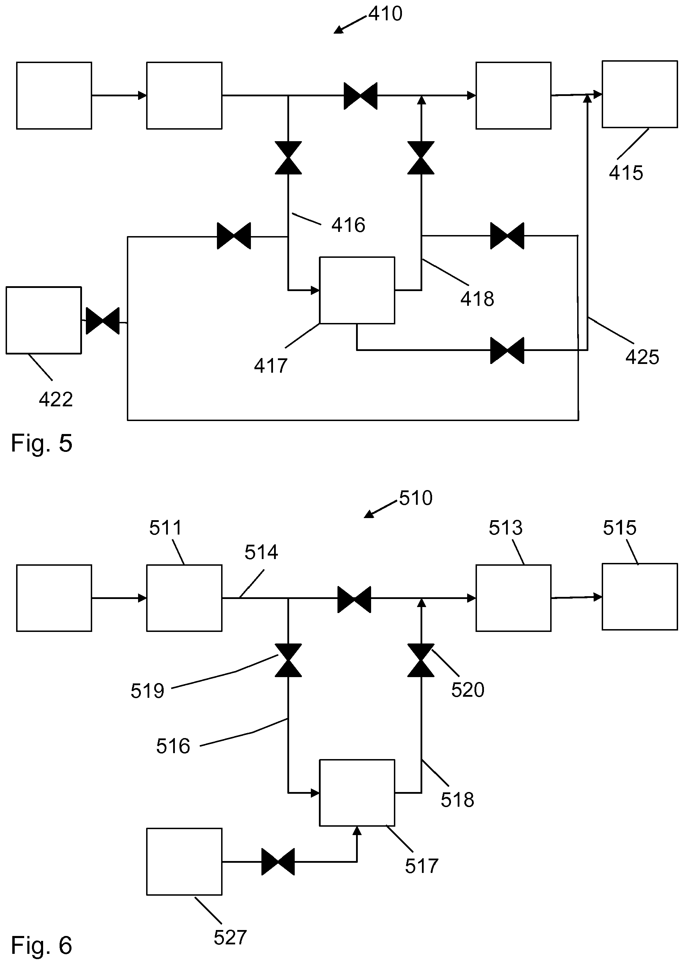

In Fig. 5 ist eine Antriebseinheit 410 mit einem sehr ähnlichen Aufbau wie die Antriebseinheit 210 in Fig. 3 dargestellt. Aus diesem Grund wird nur auf die Unterschiede der beiden Antriebseinheiten eingegangen.

Bei der Antriebseinheit 410 in Fig. 5 sind gegenüber der Antriebseinheit 210 in Fig. 3 die Einspeisung und der Auslass des Spülfluids vertauscht. Die Zuführung des Spülfluids erfolgt über die erste und/oder zweite Verbindungsleitung 416, 418. Das eingespeiste Spülfluid kann über eine Auslassleitung 425, welche von der Abgasreinigungsanlage 417 abzweigt, zum Auslass 415 geleitet werden. Das Spülmedium wird von einer Spüleinrichtung 422 zur Verfügung gestellt.

Die beschriebenen Antriebseinheiten können auch mehr als einen Turbolader und weiterhin nur eine Abgasreinigungsanlage aufweisen. In diesen Fällen gibt es zu jedem Turbolader eine eigene zweite Verbindungsleitung. Falls das Spülfluid über die zweite Verbindungsleitung zum Auslass geführt wird, ist jeder zweiten Verbindungsleitung eine eigene Auslassleitung mit einem zugehörigen Ventil zugeordnet.

In Fig. 6 ist eine Antriebseinheit 510 mit einem sehr ähnlichen Aufbau wie die Antriebseinheit 10 in Fig. 1 dargestellt. Aus diesem Grund wird nur auf die Unterschiede der beiden Antriebseinheiten eingegangen.

Die Antriebseinheit 510 in Fig. 6 weist keine Auslassleitung zum Auslass 515 auf, so dass keine direkte Verbindung unter Umgehung des Turboladers 513 von der Abgasreinigungsanlage 517 zum Auslass 515 besteht.

Zum Spülen der Abgasreinigungsanlage 517 wird der Abgasreinigungsanlage 517 direkt Spülmedium in Form von Druckluft von der Russ-Ausblasvorrichtung 527 zugeführt. Zum Ausleiten des Spülmediums wird entweder das erste Ventil 519 oder das zweite Ventil 520 geöffnet, wobei das jeweils andere Ventil geschlossen ist. Damit kann das Spülmedium entweder über die erste oder die zweite Verbindungsleitung 516, 519 in die Direktleitung 514 zwischen Verbrennungsmotor 511 und Turbolader 513 abgeleitet werden. Die beiden genannten Ventile werden insbesondere mehrmals hintereinander wechselweise geöffnet und geschlossen.

Das beschriebene Verfahren kann grundsätzlich auch bei Antriebseinheiten ausgeführt werden, die entsprechend den anderen beschriebenen Antriebseinheiten aufgebaut sind, aber ebenfalls keine Auslassleitung, also keine direkte Verbindung unter Umgehung des Turboladers von der Abgasreinigungsanlage zum Auslass aufweisen.

## Patentansprüche

1. Antriebseinheit mit
- einem Verbrennungsmotor (11),
- einem Turbolader (13),
- einer Abgasreinigungsanlage (17, 117, 217, 317, 417) zur Reinigung eines Abgases des Verbrennungsmotors (11) und
- einem Auslass (15, 215, 415),
welche so ausgeführt und angeordnet sind, dass das Abgas vom Verbrennungsmotor (11)
- in einer ersten Strömungsverbindung über die Abgasreinigungsanlage (17, 117, 217, 317, 417) zum Turbolader (13) und
- in einer zweiten Strömungsverbindung direkt zum Turbolader (13) und anschliessend zum Auslass (15, 215, 415) strömen kann,
**dadurch gekennzeichnet, dass**
eine Spüleinrichtung (22, 127, 312, 422) vorgesehen ist, mittels welcher der Abgasreinigungsanlage (17, 117, 217, 317, 417) ein Spülmedium zugeführt werden kann, und dass eine direkte, von der zweiten Strömungsverbindung unabhängige dritte Strömungsverbindung von der Abgasreinigungsanlage (17, 117, 217, 317, 417) zum Auslass (15, 215, 415) herstellbar ist.

2. Antriebseinheit nach Anspruch 1,
**dadurch gekennzeichnet, dass**
die Zuführung des Spülmediums und die dritte Strömungsverbindung von der Abgasreinigungsanlage (17, 317) zum Auslass (15) auf unterschiedlichen Seiten der Abgasreinigungsanlage (17, 317) angeordnet sind.

3. Antriebseinheit nach Anspruch 1 oder 2,
**dadurch gekennzeichnet, dass**
auf beiden Seiten der Abgasreinigungsanlage (217) eine direkte Strömungsverbindung zum Auslass (215) hergestellt werden kann.

4. Antriebseinheit nach einem der Ansprüche 1, 2 oder 3,
**dadurch gekennzeichnet, dass**
das Spülmedium von einer Russ-Ausblasvorrichtung (127) zur Verfügung gestellt wird.

5. Antriebseinheit nach einem der Ansprüche 1, 2 oder 3,
**dadurch gekennzeichnet, dass**
das Spülmedium von einem Ladeluft-Receiver (312) des Verbrennungsmotors zur Verfügung gestellt wird.

6. Verfahren zum Betrieb einer Antriebseinheit mit einem Verbrennungsmotor (11, 511) und einer Abgasreinigungsanlage (17, 117, 217, 317, 417, 517) zur Reinigung eines Abgases des Verbrennungsmotors (11, 511), wobei das Abgas in einem aktiven Zustand der Abgasreinigungsanlage (17, 117, 217, 317, 417, 517) über eine erste und eine zweite Verbindungsleitung (16, 216, 316, 416, 516; 18, 218, 418, 518) vom Verbrennungsmotor (11, 511) über die Abgasreinigungsanlage (17, 117, 217, 317, 417, 517) und in einem inaktiven Zustand der Abgasreinigungsanlage (17, 117, 217, 317, 417, 517) an der Abgasreinigungsanlage (17, 117, 217, 317, 417, 517) vorbei zu einem Auslass (15, 215, 415, 515) geleitet wird und nach einem Wechsel vom aktiven in den inaktiven Zustand die Abgasreinigungsanlage (17, 117, 217, 317, 417, 517) für eine zeitlich begrenzte Spülperiode von einem Spülmedium durchströmt wird, **dadurch gekennzeichnet, dass** im aktiven Zustand der Abgasreinigungsanlage(17, 117, 217, 317, 417) das Abgas über einen Turbolader (13) zum Auslass (15, 215, 415) strömt und in der Spülperiode die Abgasreinigungsanlage (17, 117, 217, 317, 417) direkt mit dem Auslass (15, 215, 415) strömungsverbunden ist..

7. Verfahren nach Anspruch 6,
**dadurch gekennzeichnet, dass**
- in der ersten Verbindungsleitung (16, 216, 316, 416, 516) ein erstes Ventil (19, 219, 319, 519) und in der auf einer anderen Seite der Abgasreinigungsanlage (17, 117, 217, 317, 417, 517) angeordneten zweiten Verbindungsleitung (18, 218, 418, 518) ein zweites Ventil (20, 520) angeordnet ist und
- in der Spülperiode eines der Ventile (19, 219, 319, 519; 20, 520) geöffnet und das andere geschlossen ist.

8. Verfahren nach Anspruch 7,
**dadurch gekennzeichnet, dass**
das erste und zweite Ventil (19, 219, 319, 519; 20, 520) wechselweise geöffnet und geschlossen werden.

9. Verfahren nach Anspruch 8,
**dadurch gekennzeichnet, dass** vor der Durchströmung der Abgasreinigungsanlage (17, 117, 217, 317, 417) mit dem Spülfluid die Abgasreinigungsanlage (17, 117, 217, 317, 417) direkt mit dem Auslass (15, 215, 415) strömungsverbunden wird..

10. Verfahren nach einem der Ansprüche 6 bis 9,
**dadurch gekennzeichnet, dass**
in der Spülperiode das Spülmedium in einer der Verbindungsleitungen (16, 316, 416, 418) eingeleitet wird.

11. Verfahren nach Anspruch 9 und 10,
**dadurch gekennzeichnet, dass**
in der Spülperiode das Spülmedium in einer der Verbindungsleitungen (16, 316) eingeleitet wird und von der anderen, auf der anderen Seite der Abgasreinigungsanlage (17, 317) angeordneten Verbindungsleitung (18, 218) eine Strömungsverbindung zum Auslass (15, 215) hergestellt wird.

12. Verfahren nach einem der Ansprüche 6 bis 11,
**dadurch gekennzeichnet, dass**
das Spülmedium von einer Russ-Ausblasvorrichtung (127, 527) zur Verfügung gestellt wird.

13. Verfahren nach einem der Ansprüche 6 bis 12,
**dadurch gekennzeichnet, dass**
das Spülmedium von einem Ladeluft-Receiver (312) des Verbrennungsmotors zur Verfügung gestellt wird.

## Claims

1. A drive unit comprising
- an internal combustion engine (11),
- a turbocharger (13),
- an exhaust gas purification system (17, 117, 217, 317, 417) for purifying an exhaust gas of the internal combustion engine (11) and
- an outlet (15, 215, 415),
which are configured and arranged such that the exhaust gas can flow from the internal combustion engine (11)
- via the exhaust gas purification system (17, 117, 217, 317, 417) to the turbocharger (13) in a first flow connection and
- directly to the turbocharger (13) in a second flow connection (13) and subsequently to the outlet (15, 215, 415),
**characterized in that**
a flushing device (22, 127, 312, 422) is provided by means of which a flushing medium can be supplied to the exhaust gas purification system (17, 117, 217, 317, 417), and that
a direct third flow connection, independent of the second flow connection can be established from the exhaust gas purification system (17, 117, 217, 317, 417) to the outlet (15, 215, 415).

2. A drive unit in accordance with claim 1,
**characterized in that**
the supply of the flushing medium and the third flow connection from the exhaust gas purification system (17, 317) to the outlet (15) are arranged at different sides of the exhaust gas purification system (17, 317).

3. A drive unit in accordance with claim 1 or 2,
**characterized in that**
a direct flow connection to the outlet (215) can be established at both sides of the exhaust gas purification system (217).

4. A drive unit in accordance with anyone of the claims 1, 2 or 3,
**characterized in that**
the flushing medium is provided by a soot blower (127).

5. A drive unit in accordance with anyone of the claims 1, 2 or 3,
**characterized in that**
the flushing medium is provided by a charge air receiver (312) of the internal combustion engine.

6. A method of operating a drive unit comprising an internal combustion engine (11, 511) and an exhaust gas purification system (17, 117, 217, 317, 417, 517) for purifying an exhaust gas of the internal combustion engine (11, 511), wherein the exhaust gas is conducted via a first and a second connection line (16, 216, 316, 416, 516; 18, 218, 418, 518) from the internal combustion engine (11, 511) via the exhaust gas purification system (17, 117, 217, 317, 417, 517) in an active state of the exhaust gas purification system (17, 117, 217, 317, 417, 517) and is conducted past the exhaust gas purification system (17, 117, 217, 317, 417, 517) to an outlet (15, 215, 415, 515) in an inactive state of the exhaust gas purification system (17, 117, 217, 317, 417, 517), and the exhaust gas purification system (17, 117, 217, 317, 417, 517) is flowed through by a flushing medium for a time-limited flushing period after a change from an active state into the inactive state, **characterized in that** the exhaust gas flows via a turbocharger (13) to the outlet (15, 215, 415) in the active state of the exhaust gas purification system (17, 117, 217, 317, 417) and the exhaust gas purification system (17, 117, 217, 317, 417) is in direct flow connection with the outlet (15, 215, 415) in the flushing period.

7. A method in accordance with claim 6,
**characterized in that**
- a first valve (19, 219, 319, 519) is arranged in the first connection line (16, 216, 316, 416, 516) and a second valve (20, 520) is arranged in the second connection line (18, 218, 418, 518) arranged at another side of the exhaust gas purification system (17, 117, 217, 317, 417, 517) and
- one of the valves (19, 219, 319, 519; 20, 520) is opened and the other is closed in the flushing period.

8. A method in accordance with claim 7,
**characterized in that**
the first and the second valves (19, 219, 319, 519; 20, 520) are alternately opened and closed.

9. A method in accordance with claim 8,
**characterized in that** the exhaust gas purification system (17, 117, 217, 317, 417) is put into direct flow connection with the outlet (15, 215, 415) before the flowing through of the exhaust gas purification system (17, 117, 217, 317, 417) with the flushing fluid.

10. A method in accordance with anyone of the claims 6 to 9,
**characterized in that**
the flushing medium is introduced in one of the connection lines (16, 316, 416, 418) in the flushing period.

11. A method in accordance with claim 9 and 10,
**characterized in that**
the flushing medium is introduced in one of the connection lines (16, 316) in the flushing period and a flow connection to the outlet (15, 215) is established from the other connection line (18, 218) arranged at the other side of the exhaust gas purification system (17, 317).

12. A method in accordance with anyone of the claims 6 to 11,
**characterized in that**
the flushing medium is provided by a soot blower (127, 527).

13. A method in accordance with anyone of the claims 6 to 12,
**characterized in that**
the flushing medium is provided by a charge air receiver (312) of the internal combustion engine.

## Revendications

1. Une unité d'entraînement avec
- un moteur à combustion interne (11),
- un turbocompresseur (13),
- un système de purification de gaz d'échappement (17, 117, 217, 317, 417) pour purifier un gaz d'échappement du moteur à combustion interne (11) et
- une sortie (15, 215, 415),
qui sont conçus et disposés de telle sorte que le gaz d'échappement du moteur à combustion interne (11)
- peut s'écouler vers le turbocompresseur (13) via le système de purification des gaz d'échappement (17, 117, 217, 317, 417) dans un premier raccord de débit et
- peut s'écouler directement vers le turbocompresseur (13), et ensuite vers la sortie (15, 215, 415) dans un deuxième raccord de débit,
**caractérisé en ce que**
un dispositif de purge (22, 127, 312, 422) est prévu, au moyen duquel un médium de purge peut être amené au système de purification des gaz d'échappement (17, 117, 217, 317, 417), et que un troisième raccord de débit direct indépendant du deuxième raccord de débit peut être réalisé du système de purification de gaz d'échappement (17, 117, 217, 317, 417) vers la sortie (15, 215, 415).

2. Une unité d'entraînement selon la revendication 1,
**caractérisé en ce que**
la conduite du médium de purge et le troisième raccord de débit du système de purification de gaz d'échappement (17, 317) vers la sortie (15) sont disposés sur différents côtés du système de purification de gaz d'échappement (17, 317).

3. Une unité d'entraînement selon la revendication 1 ou 2,
**caractérisé en ce que**
un raccord de débit direct vers la sortie (215) peut être réalisé sur les deux côtés du système de purification des gaz d'échappement (217).

4. Une unité d'entraînement selon la revendication 1, 2 ou 3,
**caractérisé en ce que**
le médium de purge est fournie par un dispositif de soufflage de suie (127).

5. Une unité d'entraînement selon la revendication 1, 2 ou 3,
**caractérisé en ce que**
le médium de purge est fournie par un récepteur d'air de charge (312) du moteur à combustion interne.

6. Une méthode de fonctionnement d'une unité d'entraînement avec un moteur à combustion interne (11, 511) et un système de purification de gaz d'échappement (17, 117, 217, 317, 417, 517) pour purifier un gaz d'échappement du moteur à combustion interne (11, 511), dans laquelle, dans un état actif du système de purification de gaz d'échappement (17, 117, 217, 317, 417, 517), le gaz d'échappement est conduit du moteur à combustion interne (11, 511) via une première et une deuxième conduite de raccordement (16, 216, 316, 416, 516 ; 18, 218, 418, 518) via le système de purification de gaz d'échappement (17, 117, 217, 317, 417, 517) et dans un état inactif du système de purification de gaz d'échappement (17, 117, 217, 317, 417, 517), le gaz d'échappement est conduit à travers le système de purification de gaz d'échappement (17, 117, 217, 317, 417, 517) vers une sortie (15, 215, 415, 515) et après un changement de l'état actif à l'état inactif, le système de purification de gaz d'échappement (17, 117, 217, 317, 417, 517) est coulé par un médium de purge pendant une période de purge limitée, **caractérisé en ce que**, dans un état actif du système de purification de gaz d'échappement (17, 117, 217, 317, 417), le gaz d'échappement s'écoule via un turbocompresseur (13) vers la sortie (15, 215, 415) et dans la période de purge, le système de purification de gaz d'échappement (17, 117, 217, 317, 417) est directement raccordé en débit à la sortie (15, 215, 415).

7. Une méthode selon la revendication 6,
**caractérisé en ce que**
- une première vanne (19, 219, 319, 519) est disposée dans la première conduite de raccordement (16, 216, 316, 416, 516) et une deuxième vanne (20, 520) est disposée dans la deuxième conduite de raccordement (18, 218, 418, 518) disposé de l'autre côté du système de purification de gaz d'échappement (17, 117, 217, 317, 417, 517) et
- pendant la période de purge, l'une des vannes (19, 219, 319, 519; 20, 520) est ouverte et l'autre est fermée.

8. Une méthode selon la revendication 7,
**caractérisé en ce que**
la première vanne et la deuxième vanne (19, 219, 319, 519; 20, 520) sont ouvertes et fermées alternativement.

9. Une méthode selon la revendication 8,
**caractérisé en ce qu'**avant l'écoulement du système de purification de gaz d'échappement (17, 117, 217, 317, 417) avec le fluide de purge, le système de purification de gaz d'échappement (17, 117, 217, 317, 417) est directement raccordé en débit à la sortie (15, 215, 415).

10. Une méthode selon l'une des revendications 6 à 9,
**caractérisé en ce que**
le médium de purge est introduit dans l'une des conduites de raccordement (16, 316, 416, 418) pendant la période de purge.

11. Une méthode selon la revendication 9 et 10,
**caractérisé en ce que**
le médium de purge est introduit dans l'une des conduites de raccordement (16, 316) pendant la période de purge et un raccord de débit vers la sortie (15, 215) est établi de l'autre conduite de raccordement (18, 218), qui est disposée de l'autre côté du système de purification de gaz d'échappement (17, 317).

12. Une méthode selon l'une des revendications 6 à 11,
**caractérisé en ce que**
le médium de purge est fournie par un dispositif de soufflage de suie (127, 527).

13. Une méthode selon l'une des revendications 6 à 12,
**caractérisé en ce que**
le médium de purge est fournie par un récepteur d'air de charge (312) du moteur à combustion interne.
